# EUROPEAN PATENT APPLICATION

(11) **EP 4 840 707 A1**
(43) Date of publication of application: **18.11.2026**
(21) Application number: 26177504.3
(22) Date of filing: 08.05.2026
(51) Int. Cl.: B60S 3/00

(54) **VEHICLE WASHING INSTALLATION WITH DRYING BAR AND/OR PRESSURIZED WATER DISPENSING BAR HAVING REDUCED FOOTPRINT**

(30) Priority: 16.05.2025 IT 202500011062
(71) Applicant: Aquarama S.r.l., 12060 Novello (CN) (IT)
(72) Inventor: Abbà, Adriano Mario, 12010 Vignolo (CN) (IT); Fulcheri, Bruno, 12060 Bastia Mondovì (CN) (IT); Bottero, Emanuele, 12084 Mondovì (CN) (IT)
(74) Representative: Karaghiosoff, Giorgio Alessandro

(57) **Abstract**

Vehicle washing installation, in particular for cars or the like, comprising at least one gantry on which a drying bar and/or pressurized water dispensing bar is mounted to direct, transversely to the longitudinal extension of said bar, a drying air jet and/or pressurized water towards the vehicle,
said bar being mounted rotatable through a predetermined angular range around an axis coinciding with and/or parallel to its longitudinal axis and having terminal portions at its ends that engage with the support columns of the gantry,
at least one drive unit being provided to rotate said bar around said longitudinal axis of rotation so as to direct the air jet between a first and a second extreme position angularly offset relative to an intermediate vertical position. The installation has the feature of comprising coupling elements between the terminal portions of the bar and the vertical support columns of the gantry that allow rotation of the bar around a first longitudinal axis in the transition from the first extreme position to the intermediate vertical position and around a second longitudinal axis, different from the first, in the transition from the intermediate vertical position to the second extreme position and vice versa.

## Description

The present invention relates to a vehicle washing installation, in particular for cars or the like, comprising at least one gantry on which a drying bar is mounted to direct, transversely to the longitudinal extension of said bar, a drying air jet and/or pressurized water dispensing towards the vehicle,
said bar being mounted rotatable through a predetermined angular range around an axis coinciding with and/or parallel to its longitudinal axis and having terminal portions at its ends that engage with the support columns of the gantry,
at least one drive unit being provided to rotate said bar around said longitudinal axis of rotation so as to direct the air jet between a first and a second extreme position angularly offset relative to an intermediate vertical position.

Installations of this type are known in the prior art and present various configurations of the drying and/or pressurized water dispensing bar, also referred to as drying blade.

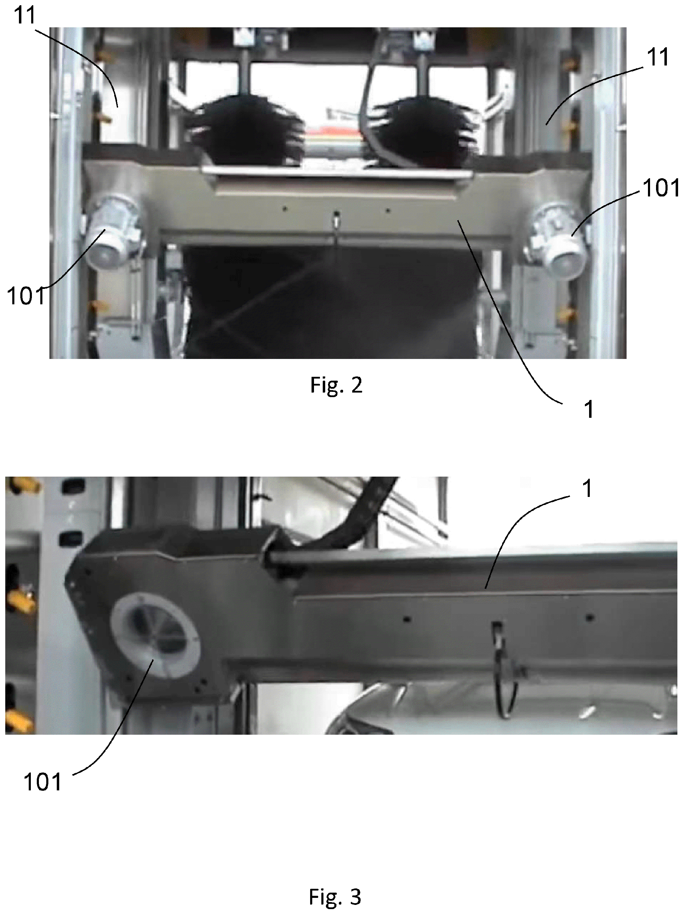

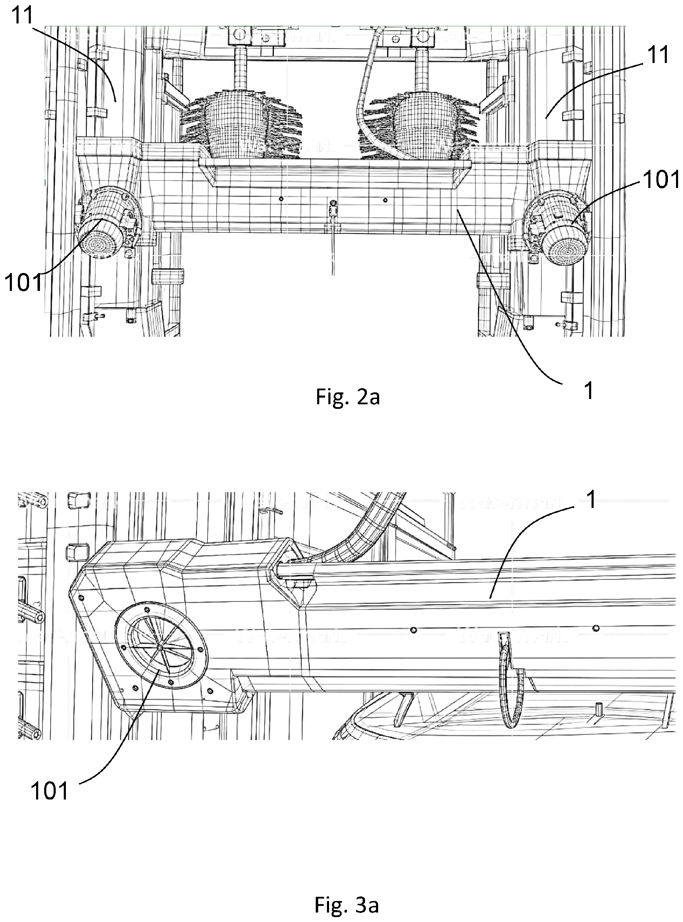

Figures 2;2a and 3;3a show an example of a drying blade currently on the market in the installations of the applicant of the present patent application, known under the names Stargate, S7, S9, S11, S111 and SHP. Figures 2a and 3a are the wireframe version of the images shown in Figures 2 and 3, respectively.

In order to provide optimal drying, the drying blades are capable of directing the air flow in a settable manner. In the installations cited above, it is, for example, possible to set the orientation of the air flow in three directions: a first intermediate position in which the flow is vertically directed towards the vehicle and two limit positions positively and negatively inclined with respect to the vertical position so as to direct the flow at ±30° with respect to the vertical.

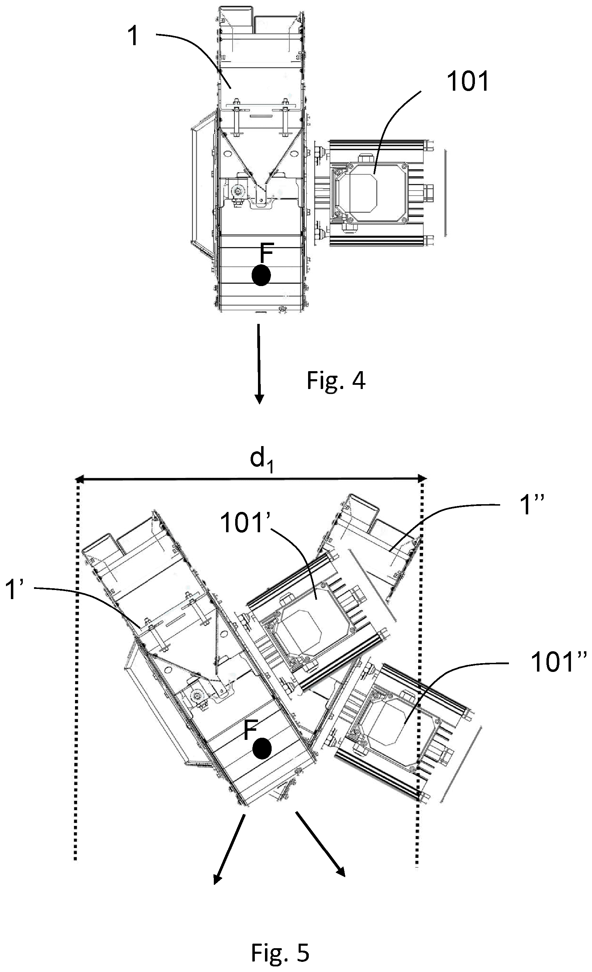

In order to obtain these inclinations, in the installations according to the prior art a single oscillation fulcrum bar/upright coupling system is used. Figures 4 and 5 show a side view of a drying bar 1 of the traditional type, with the oscillation fulcrum F and the fan unit 101, generally provided cantilevered at the ends of said bar, highlighted. In the figures, the air flow is indicated by an arrow. The air flow is vertical when the bar is in the vertical position, while it is inclined by approximately 30° to the right or to the left when the bar is rotated by a corresponding angle around the fulcrum F.

The rotation of the bar 1 takes place within a substantial axial space, indicated by d₁, due to the pitch of the device volume.

The aim of the present invention is to provide a motor vehicle washing installation with a drying bar having a reduced rotational and dimensional footprint in height with a greater drying width.

The invention achieves the aim with an installation as described at the beginning, in which coupling elements are introduced between the terminal portions of the bar and the vertical support columns of the gantry having the characteristic of allowing rotation of the bar around a first longitudinal axis in the transition from the first extreme position to the intermediate vertical position and around a second longitudinal axis, different from the first, in the transition from the intermediate vertical position to the second extreme position and vice versa. The two rotation axes preferably lie in a vertical longitudinal section plane of the bar.

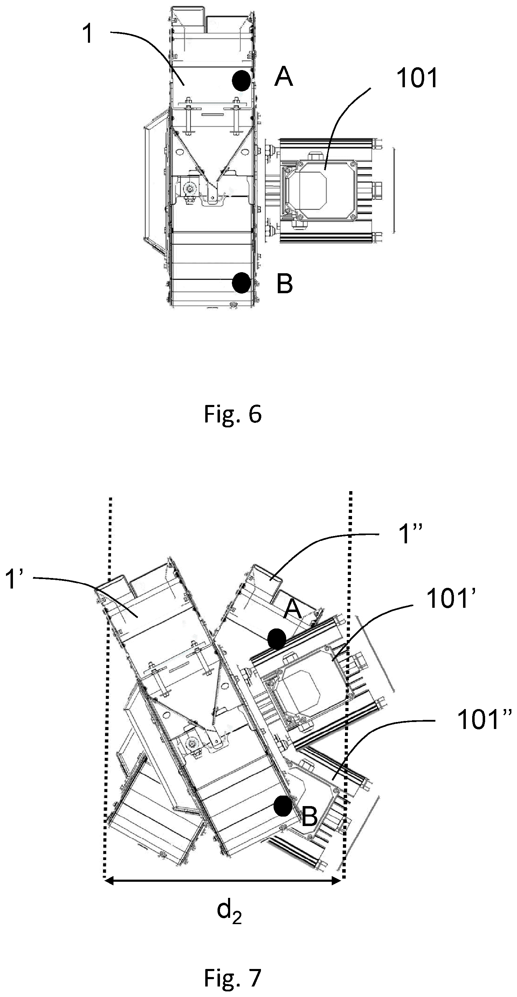

The inventors were able to observe that the axial footprint of the drying bar of the known systems is substantially due to the use of the same rotation axis for both positive and negative oscillations with respect to a vertical longitudinal section plane of the bar. If the rotation axes are two and are vertically offset from each other, with respect to an intermediate central point, said axes being intended to be used alternately to each other for positive and negative rotation, it is, on the contrary, possible to obtain an overall reduced pitch as shown in Figures 6 and 7 and indicated by d₂.

Hence the idea underlying the invention of using coupling elements between the drying bar and the vertical uprights capable of allowing these two rotations in place of the single rotation around a single fulcrum.

Various embodiments are possible to implement the above-mentioned solution.

According to one embodiment, the coupling elements between the terminal portions of the bar and the vertical support columns of the gantry comprise a first non-rotatable connection plate, preferably transverse, i.e., perpendicular to the longitudinal axis of the drying bar, and which first plate has two arcuate guide grooves or slots facing each other with their concave sides and spaced apart from each other by a predetermined distance,
wherein at least one or each terminal end of said drying bar is provided with a terminal end plate carrying a pair of sliding and/or rotating pins or shafts, positioned relative to each other so as to coincide respectively with one of said two slots or grooves of the corresponding said first plate,
the slots or grooves on the first connection plates and the pairs of pins or shafts being provided at each terminal end of the drying bar and each comprising two axial pins or shafts that are spaced apart transversely from each other and in the direction of the corresponding upper and lower sides of the drying bar, in vertical position, provided in axially coinciding positions, with reference to the longitudinal axis of the drying bar,
each of said two grooves or slots having a curvature radius referred to an axis substantially coinciding with one end of the other of said two grooves or slots, so that by locking the pin or shaft engaged in one of said grooves or slots, at an end of the corresponding groove or slot in which it is engaged, said pin or shaft forms the rotation axis that allows translation of the other pin or shaft along the other groove or slot of said two grooves or slots.

As highlighted above, each of the two pins on a said terminal end of the drying bar constitutes the axial extension on said end side of the corresponding pin on the opposite end side, while each of the two slots on a first plate associated with one terminal end of the drying bar coincides and/or is axially congruent with a corresponding slot on the first connection plate associated with the opposite terminal end of the drying bar.

Each of said first connection plates is advantageously mounted on a slide or carriage that is slidable along a vertical translation guide provided along the corresponding vertical column of the gantry.

The rotation of the first plate around the first rotation pin causes rotation of the bar around the first longitudinal axis of rotation, whereas the rotation of the first surface around the second rotation pin causes rotation of the bar around the second longitudinal axis of rotation.

In one embodiment, it is possible to provide for each pair of sliding pin and guide slot a linear actuator which alternately operates as a locking/unlocking member of a respective pin at said end of the slot in which said pin is engaged, and as a member that drives the translation stroke of said pin along said arcuate slot, said actuator operating as a removable pushing and retaining member, in the position of the pin at the end of the associated slot, and as a drag member of said pin along said arcuate slot between the two ends of the same, when the second pin is pushed and locked at the end of the associated slot in which said second pin is engaged and vice versa,
causing an oscillating movement alternately around one and the other of said two pins for respectively one direction of oscillation and for the opposite one.

The drying bar is advantageously capable of oscillating so as to direct the air flow at an inclination from -α° to +α° relative to a vertical section plane, where α denotes an angle between 0° and 90°, in particular 30°.

The +α° position can be reached from the intermediate position corresponding to a vertical air flow, also referred to as air blade, by rotating the bar around the first longitudinal axis of rotation defined by first pins of said two pairs of pins at the terminal ends of the drying bar and which are axially coinciding with each other, and holding said first pins fixed with respect to a translation along the corresponding arcuate groove or slot, and allowing the second pins, axially coinciding with each other, of said two pairs of pins at the terminal ends of the drying bar to slide in the associated arcuate groove.

The -α° position can, on the contrary, be reached from the intermediate position by rotating the drying bar around said second longitudinal axis of rotation, holding fixed, with respect to a translation in the corresponding groove or slot, said second pins of said two pairs of pins at the terminal ends of the drying bar and which define said second longitudinal axis of rotation, and freely translating said first pins of the pairs of pins at the ends of the drying bar along the corresponding arcuate groove or slot.

According to one embodiment, the alternative rotation around the two first or second oscillation pins and the locking/release of their sliding along the corresponding arcuate groove or slot is achieved by means of a first and a second single- or double-acting pull/push linear actuator, with a first linear actuator being provided for each end of the drying bar, said first linear actuator being interposed between a first of the two oscillation pins and a fulcrum element fixed to said first connection plate, while the second linear actuator is interposed between the second of said two oscillation pins and the same or a different fulcrum element fixed to said first connection plate.

The control means of the actuator cylinders are advantageously configured to move the rods of said actuators in succession such that, when one rod is extended or retracted, the other rod is held fixed with a predetermined extension so as to retain the pin to which it is fulcrumed in a fixed position at one end of the corresponding arcuate groove or slot, while the rod that is extended and/or retracted drags or pushes the other of said first and second pins to slide along the corresponding arcuate groove or slot from one to the other of the two ends of the same, causing the rotation of the drying bar around the pins that are respectively retained against translation along the corresponding arcuate groove or throat.

The pull/push rods may be provided at one or both terminal ends of the drying bar.

The rotational support terminals of the drying bar are advantageously mounted vertically slidable along a vertical column and in a manner synchronized with each other in terms of time and/or stroke, in both upward and downward directions.

According to one feature, the rotation actuation system, i.e., the actuating members of the oscillation of the drying bar according to the embodiments described above, and the vertical raising/lowering motors along the gantry columns are controlled in synchronized manner with each other and corresponding to the shape of the car by means of a control unit which executes a program comprising the instructions for the synchronized control of raising and lowering and oscillation of the drying air blade generation unit.

Furthermore, according to a still further feature, said gantry, i.e., said drying bar and/or a vehicle to be treated are translatable relative to each other in the direction of the longitudinal and/or transverse extension of said vehicle.

In addition, profile scanning sensors, lateral and/or front and/or rear of the vehicle, are fixed or fixable to the drying bar and/or possibly also to other parts of the gantry, said sensors being connected to a unit for analyzing said profile obtained from said scanning,
said analysis unit directly or indirectly controlling the positioning of the gantry and/or of the drying bar with respect to the vertical position and to the inclination relative to the vertical.

As regards said analysis unit, this may be a processing unit in which a program is loaded that encodes the instructions for enabling such unit to identify the protruding zones of the bodywork from the data provided by the scanning unit and to enable such unit to generate the control signals of motorized units for displacing the gantry and/or the operating units present thereon.

In this case, the analysis unit can directly control the displacements of the gantry and/or of the drying bar and/or of the support unit and/or of the nozzle or nozzles.

Further improvements are the subject of the dependent claims.

The features of the invention and the advantages deriving therefrom will become more apparent from the following description of some preferred embodiments illustrated by way of example in the accompanying figures, in which:
- Figure 1 schematically shows a side view of an installation for washing a motor vehicle.
- Figures 2 and 3 show perspective views of a drying bar according to the prior art.
- Figures 2a and 3a show a line-art version of the images of the previous Figures 2 and 3.
- Figures 4 and 5 show a cross-section along a plane perpendicular to the longitudinal axis of the drying bar of the previous figures in three rotation positions of said drying bar, respectively in the two extreme positions (Fig. 5) and in the intermediate oscillation position (Fig. 4).
- Figures 6 and 7 show a cross-section along a plane perpendicular to the longitudinal axis of the drying bar according to one embodiment of the invention in the same three rotation positions of said drying bar.
- Figure 8 shows the same views as the previous figures, with the couplings of the ends of the drying bar to corresponding transverse fastening plates to vertical sliding slides along the vertical columns of the washing gantry highlighted.

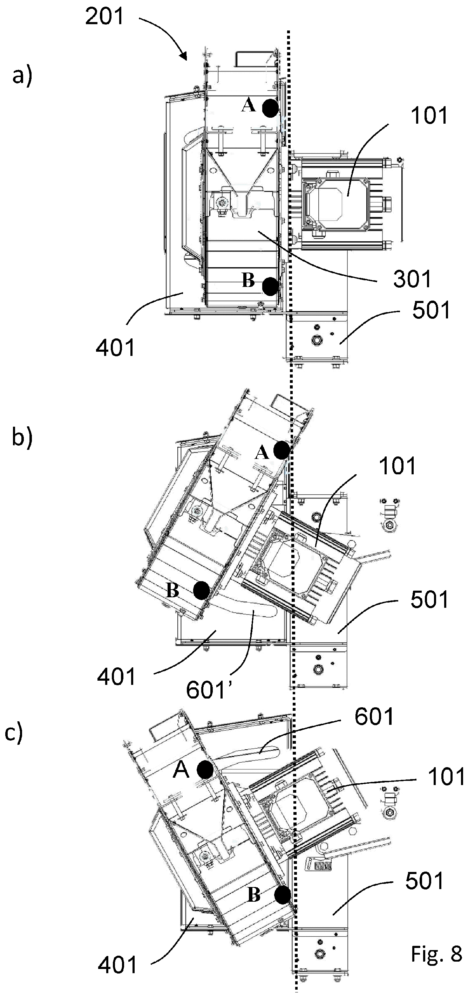

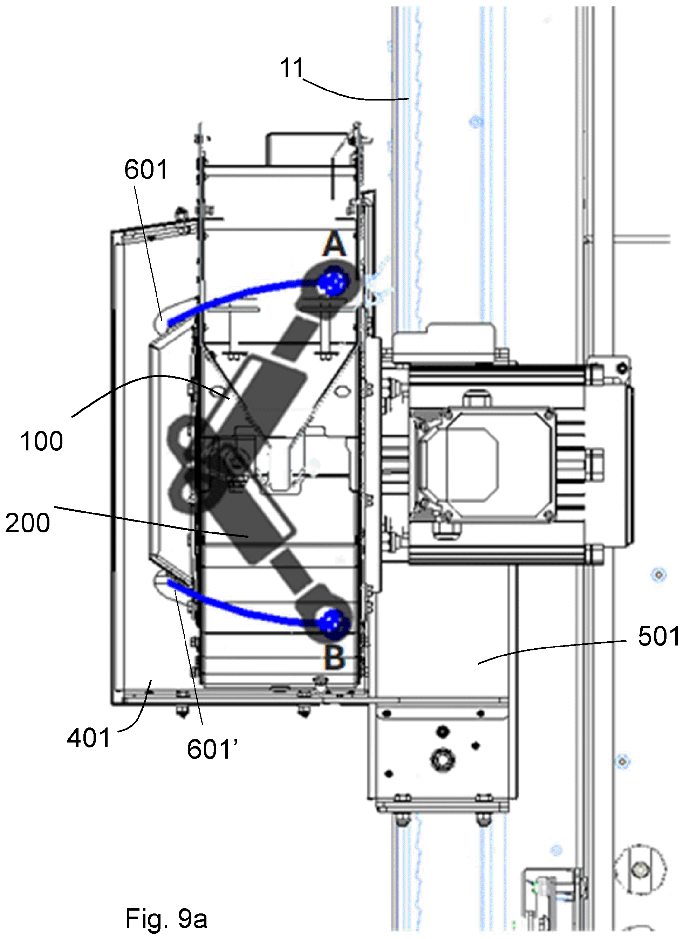

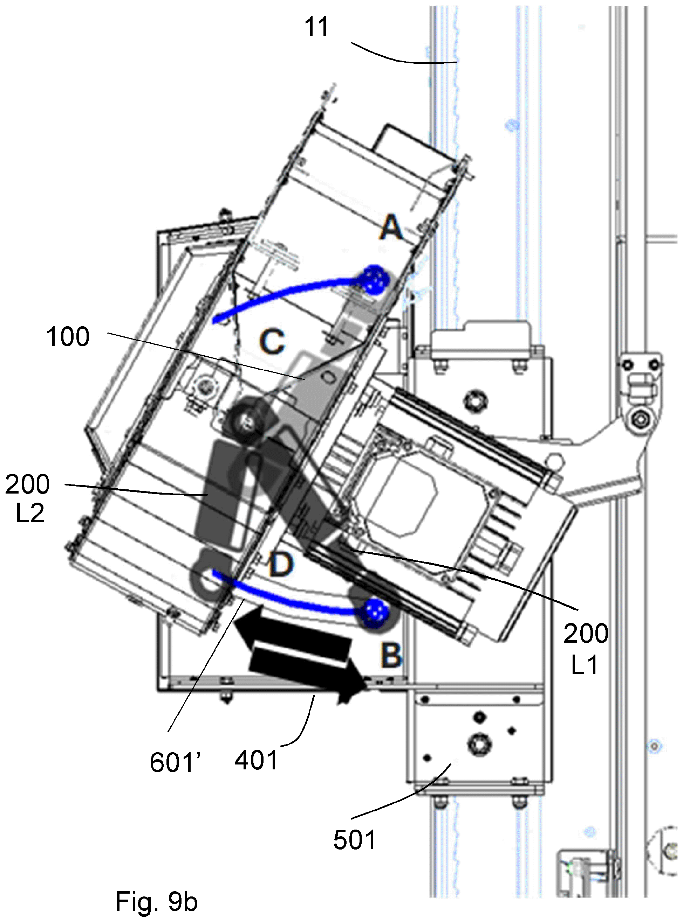

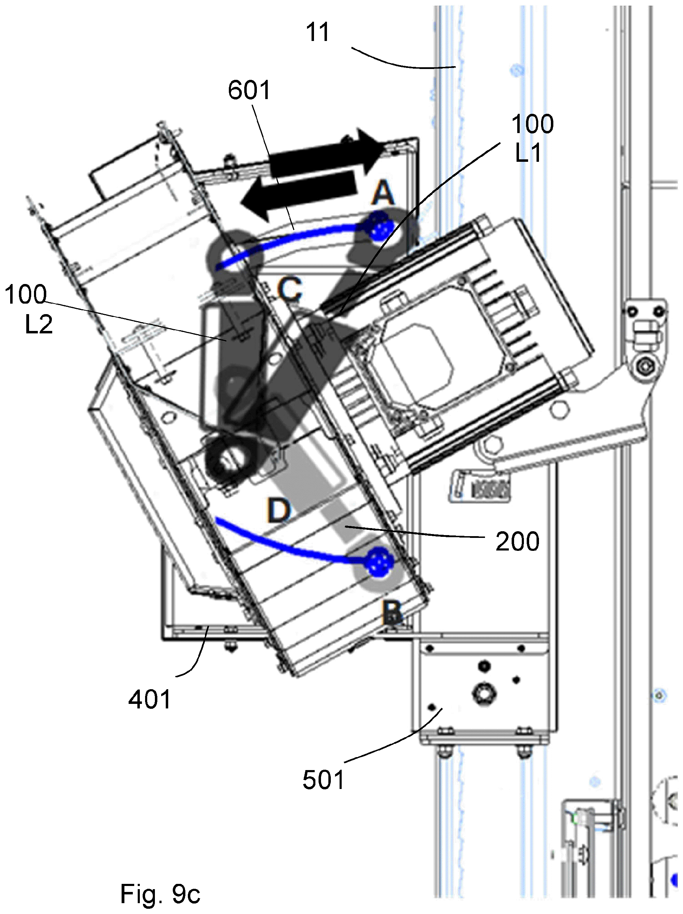

Figures 9a, 9b and 9c show the oscillating movements of the example of Figures 8a, 8b, 8c with reference to an embodiment which provides, for the actuation of the alternative oscillation movement of the drying bar around the two different axes, a pair of linear actuators, such as hydraulic or pneumatic cylinders or electric actuators or the like, the rods of which operate in pull and push on each pin of the pair of pins on one or both terminal ends of the drying bar and which allow the three displacements of the drying bar of the figures from the vertical position to the two opposite extreme angular positions of the angular stroke provided for the drying bar to be implemented.

Vehicle washing installations, and in particular those for washing cars, are divided into two large categories: tunnel installations, in which it is the vehicle that advances to be brought in correspondence with the washing and drying systems, and movable gantry installations, in which the vehicle is stationary on a track along which one or more gantry structures move, sliding on rails, on which the devices for spraying the washing liquids, the brushes and the vehicle drying devices are mounted.

In both types of installation, the washing operations may take place by means of a group of rotating brushes which come into contact with the various parts of the bodywork during the relative movement between gantry and vehicle and/or by means of high-pressure jets of a washing fluid and optionally of a pre-washing fluid.

Furthermore, the installations known in the state of the art present various configurations and different solutions relating to the positioning and the embodiment of the brush group, of the devices for spraying the washing liquids and of the drying devices, as well as of the hydraulic and electrical systems intended to regulate the operation of the vehicle washing installation.

Also known and widespread are washing installations having a double gantry, so as to differentiate the washing phases by assigning different functions to each gantry, in order to speed up the washing.

It is specified that the embodiments illustrated in the accompanying figures are reported for purely illustrative purposes and to better clarify the concepts and advantages of the installation that is the subject of the present invention, but they are not to be construed as limiting the inventive concept of the present patent application, which is to provide a vehicle washing installation, in particular for cars, comprising features adapted to reduce the footprint of the drying bar and, more in general, of oscillabile crossbars, such as those housing the washing nozzles which, in one embodiment, may also reside inside the drying bar itself.

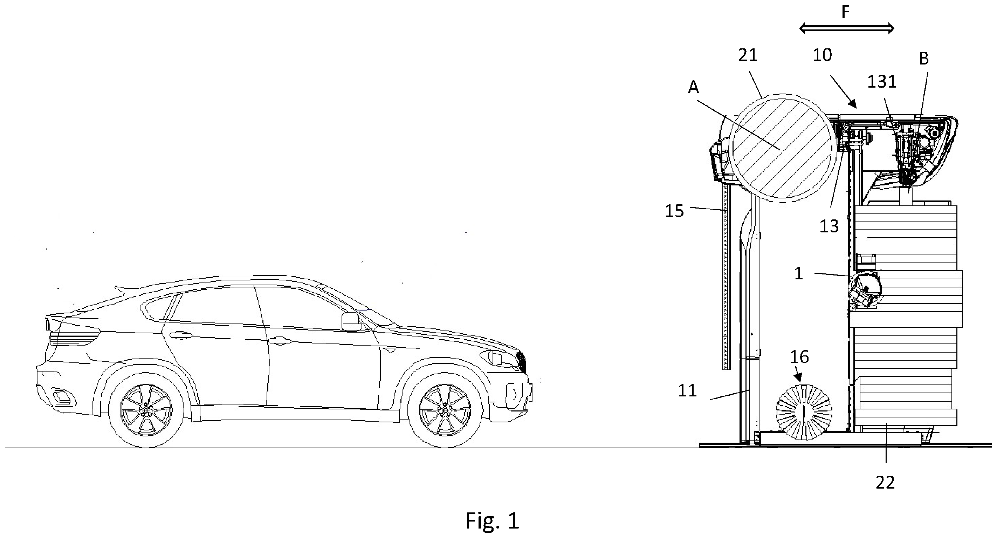

The gantry 10, according to a non-limiting embodiment shown in Fig. 1, is constituted by two vertical uprights 11, connected to each other by means of a horizontal crossbar 13 arranged at a certain height.

The vertical uprights, of which only one indicated by 11 in the figure is visible, support between them at least one of the brushes belonging to the brush group.

In particular, the brush group is constituted by a horizontal brush 21, rotatably supported so as to rotate about a horizontal rotation axis with respect to the vehicle resting plane, and by two vertical brushes 22 which are rotatably supported so as to be able to rotate about a vertical rotation axis with respect to the resting plane of the vehicle to be washed.

Furthermore, the horizontal crossbar 13 is connected frontally to the uprights 11, so as to support the two vertical brushes 22 cantilevered.

The vertical rotation axis B is upper supported by the horizontal crossbar 13, in particular the upper end of the vertical rotation axis B is connected to support means 131 thereof, so as to allow the rotation of the vertical brushes 22.

Preferably the horizontal rotation axis A of the horizontal brush 21 is translatable in the vertical direction, i.e., upwards and/or downwards with respect to the vehicle resting plane, translation means (not illustrated) being provided to set the horizontal brush 21 in relative motion with respect to the vehicle to be washed, so that the horizontal brush 21 can exert a transverse washing action over the entire length, or over a large part of the length, of the vehicle.

Similarly, it is possible to provide that the support means 131 of the vertical brushes 22, in addition to allowing rotation around the axis B, also allow translation of the vertical brushes in a direction of mutual approach/distancing.

The car washing installation that is the subject of the present invention may further provide the components and features common to the installations known in the state of the art.

For example, the vertical brushes 22 may be guided to slide both transversely and longitudinally with respect to the vehicle to be washed.

Washing members operating by means of the emission of high-pressure jets of a washing fluid and drying devices, supported on the same gantry, may further be provided.

The gantry 10 can rest on the ground and be slidably guided on rails by means of translation means as indicated by the arrow F.

Alternatively, the gantry may provide, in combination with or in replacement of one or more brushes, pressure spraying nozzles of at least one washing fluid and of at least one rinsing fluid as provided in washing installations which do not provide contact with the surface of the bodywork of the vehicles. In this case one or more spraying nozzles can be carried by one or more gantries similar to the gantry 10. Said spraying nozzles can be distributed according to a predetermined pattern along an upper crossbar and along the two vertical columns of the corresponding spraying gantry and may also be mounted on one or more oscillating bars so as to allow their orientation corresponding to the zones against which the spraying jet is to be dispensed.

Each type of gantries described above may comprise drying devices with drying air jet or blade.

A drying device comprises a horizontal, transverse oscillating bar 1 constituted by a tubular casing wall which is open on one side, i.e., substantially U-shaped. The two walls forming the U-shape branches are parallel to each other and define a mouth for dispensing the drying air flow.

The bar 1 has, at its ends, terminal portions 201 which are intended to engage with the support columns 11 in a slidable manner and synchronized with each other by means of motorized vertical translation actuators not illustrated in detail.

Fan units for generating a drying air flow, which are generically indicated by 101, are integrated in the terminal portions 201.

Inside the bar 1, in correspondence with the drying air outlet mouth, nozzles of high-pressure fluid washing members according to the state of the art may optionally be provided. In an alternative configuration, the nozzles of washing members are provided mounted on a bar dedicated to the purpose and separate from the drying bar.

The bar 1 has a longitudinal extension from upright to upright substantially equal to the width of the gantry, i.e., to the maximum width of the vehicles that can be washed with the device.

As shown in Figs. 8 and 9, the ends of the bar 201 have transverse surfaces 301 oscillatingly anchored to corresponding transverse fastening plates 401 fixed to vertical slides 501 of translation along the vertical columns 11 of the gantry.

The transverse surfaces have, in this embodiment, a substantially rectangular cross-section with the longest side which is arranged parallel to the vertical columns when the drying bar is arranged in the intermediate oscillation position with an air jet exiting in a substantially vertical direction.

The transverse surfaces 301 have a pair of pins or shafts of oscillation, indicated in the figures with A and B and which are arranged aligned along the side of the casing wall of the bar facing the columns 11.

In the embodiment illustrated and without this constituting a limitation, said side is the longest side in the height direction of the rectangular cross-section of the casing wall of the drying bar, closest to the vertical columns 11 as shown in Fig. 8.

The pins or shafts A and B alternately constitute the oscillation fulcrum of the drying bar 1.

In the following description the terms oscillation pin, shaft, oscillation shaft, fulcrum, oscillation fulcrum and/or oscillation axis are to be considered equivalent and interchangeable with each other in the general technical sense.

In order to allow the rotation around both fulcrum A and fulcrum B, on each fastening plate 401 there are provided, for the pin defining a fulcrum A and for that defining a fulcrum B, a first and a second arcuate groove or slot 601, 601' in which the oscillation pins or shafts A and B respectively engage axially. The grooves or slots 601, 601' have the shape of arcs of a circumference having a predetermined angular extension and arranged opposite each other with the concave sides facing each other and with the ends correspondingly vertically aligned in such a way that, when the drying bar 1 is arranged in the intermediate oscillation position (Fig. 8a), i.e., in this example in the vertical position thereof and/or of the drying air jet or blade emitted by said bar, the oscillation pins or shafts A and B are arranged, respectively, in the ends of the grooves closest to the gantry columns.

When, from the intermediate position, i.e., the vertical position of the bar and/or of the dispensed air jet or blade, said drying bar is induced to rotate around fulcrum A in order to reach a position in which the air flow is inclined to the left, for example by approximately 30° with respect to the vertical (Fig. 8b), the pin or shaft A remains fixed in its starting position at a predetermined end of the corresponding groove or slot, i.e., in the example, at the end of the corresponding groove or slot closest to the column 11 of the gantry 10, while the pin or shaft B is left free to translate along the corresponding arcuate groove or slot 601', said translation being controlled by a dedicated drag and/or push actuator.

When, from the intermediate vertical position (Fig. 8a), the drying bar is induced to rotate around fulcrum B in order to reach a position in which the air flow is inclined to the right, for example by approximately -30° with respect to the vertical (Fig. 8c), the pin or shaft coinciding with fulcrum B is held fixed in its position at a predetermined end of the corresponding groove or slot 601', while the pin or shaft A is left free to translate in the corresponding groove or slot 601, said translation being controlled by a dedicated drag and/or push actuator.

Said two predetermined ends of the arcuate grooves or slots 601 and 601' in which the corresponding pins or shafts A and B are alternately retained with respect to a translation along the same are provided aligned with each other vertically or along a direction defined as the intermediate positioning direction of the drying bar.

Thanks to this measure, the reaching of the extreme angular positions can take place using two rotation fulcrums instead of only one, with consequent reduction of the axial footprint, as appears from Figures 5 and 7 which show the overall footprint of the drying bar in the two extreme oscillation positions.

The rotation around the two fulcrums can advantageously be obtained by means of linear actuator cylinders the rods of which have an alternative function of pulling and pushing. Said actuator cylinders may be single-acting or double-acting.

The actuator cylinders have a fixed end hinged to a stationary abutment on the fastening plate.

In the configuration of the embodiment illustrated, said stationary articulation abutment of the actuator cylinders is provided at the distal perimeter edge of said connection plate with respect to the vertical column of the gantry, while the rods are hinged respectively to one of the oscillation pins or shafts of the corresponding terminal end of the drying bar or vice versa.

Figures 9a to 9c show a possible configuration of such linear actuator cylinders and of the corresponding rods. In Fig. 9a, the drying bar is in the intermediate vertical position. The rods of the actuator cylinders have the same length.

In Fig. 9b, the drying bar is in the position facing 30° to the right. To pass from the intermediate position to this position, the rod of cylinder 100 remains fixed while the rod of cylinder 200 is retracted to pass from the length L1 to L2. This allows the rotation of the drying bar around fulcrum A. The pin or shaft initially in the position indicated by B then passes to the position indicated by D in Figure 9b or from this back to that indicated by B, while the pin or shaft constituting fulcrum A remains fixed with respect to a translation at the predetermined end of the corresponding groove or slot 601.

In Figure 9c, the drying bar is in the position facing 30° to the left. To pass from the intermediate position to this position, the rod of cylinder 200 remains fixed while the rod of cylinder 100 is retracted to pass from the length L1 to L2. This allows the rotation of the drying bar around fulcrum B. This time, the pin or shaft initially in the position indicated by A then passes to the position indicated by C in Figure 9c or from this back to that indicated by A, while the pin or shaft constituting fulcrum B remains fixed with respect to a translation at the predetermined end of the corresponding groove or slot 601' .

The drying bar can therefore oscillate so as to direct the air flow downwards, for example, from -30° to +30° with respect to the vertical, while maintaining a reduced axial footprint compared to the state of the art as shown in Figures 5 and 7.

As an alternative to hydraulic or oleodynamic or pneumatic actuators, electromechanical linear actuators, i.e., piloted by electric motors, or connecting rod/crank systems or cam linkages capable of allowing the alternate rotation around fulcrums A and B as a function of the inclination angle to be set may be employed. Said angle is advantageously varied during the washing cycle so as to ensure that the air flow is always directed onto the surface of the vehicle and with a correct inclination, whatever the relative position between the gantry and the vehicle itself.

According to a further feature, the gantry illustrated in Figure 1 has a profile detection unit, at least of the lateral profile, i.e., of the projection of the vehicle profile onto a vertical longitudinal plane, i.e., oriented in the front-rear direction of the vehicle, indicated by 15 and carried by the gantry 10 in a position advanced by a predetermined extent with respect to the brushes and to the treatment units such as the high-pressure washing fluid emission bar and/or the drying air dispensing bar or other treatment units.

In the embodiment illustrated, said unit 15 for detecting the shape of the vehicle profile is constituted by a linear array of sensors arranged side by side in the vertical direction. The sensors may be of different types and may, for example, comprise distance sensors, for example acoustic and/or optical, which detect the height from the ground of the vehicle profile at the point at which the vertical linear array intersects the vehicle profile.

The unit 15 for scanning the lateral and/or front and/or rear vehicle profile may be embodied according to one of the embodiments of the following list:
a. Photocell barrier for vehicle scanning
b. Sensing with three photocells mounted on a roof drying bar and/or on a support bar of the nozzles for the high-pressure fluid
c. Ultrasonic sensors
d. Laser sensors
e. Radar sensors
f. Sensing with washing brush by measuring the power absorbed for rotation

and/or by combinations of these,
each of said scanning units being provided in combination with a unit for measuring the longitudinal position of the gantry and/or of the support group and/or of the nozzle or nozzles along the front-rear extension of the vehicle.

Motorized units, not illustrated in detail, are associated with the gantry, each of which performs different functions including the vertical translation of the horizontal brush, the rotation of the horizontal brush, displacements relative to the gantry of the vertical brush or brushes and the rotation of said vertical brush or brushes, the vertical displacement of the support bar of the nozzle or nozzles for dispensing the high-pressure washing fluid jets, the rotation around the horizontal axis of said bar and/or of the nozzle or nozzles, the vertical translation of the drying air dispensing bar and its oscillation with respect to the vertical, the translation of the gantry relative to the vehicle and other operating units such as, for example, the wheel rim washing units.

The motorized units, both those illustrated in detail such as the actuator cylinders, and those not expressly illustrated and/or described, are controlled by a control unit which is not illustrated in detail. The displacement of the drying bar and/or of the dispensing bar and/or of the brushes takes place as a function of the shape of the detected vehicle profile, at least the longitudinal one, in such a way that the operating units such as the brushes and/or the nozzles for dispensing the high-pressure washing fluid and/or the dispensing bar of the washing fluid and/or of the drying air move vertically and horizontally along a non-interference path with the vehicle that follows the vehicle profile, maintaining said operating units at such a distance that they perform the intended function, that is, at such a distance that the bristles of the brushes act on the surface of the vehicle and/or at such a distance that the high-pressure fluid jets and/or the drying air act effectively on the surface of the vehicle in relation to the function provided therefor, without interference arising between the structure of the brushes and of the bars that may lead to damage to the vehicle.

## Claims

1. Vehicle washing installation, in particular for cars or the like, comprising at least one gantry on which a drying bar (1) is mounted to direct, transversely to the longitudinal extension of said bar, a drying air jet towards the vehicle,
said bar (1) being mounted rotatable through a predetermined angular range around an axis coinciding with and/or parallel to its longitudinal axis and having terminal portions (201) at its ends that engage with the support columns (11) of the gantry,
at least one drive unit (100, 200) being provided to rotate said bar around said longitudinal axis of rotation so as to direct a jet and/or a blade of drying air between a first and a second extreme position angularly offset relative to an intermediate, substantially vertical position of said bar and/or at least of said jet or blade of drying air,
**characterized in that** it comprises coupling elements (301, 401) between the terminal portions (201) of the bar and the vertical support columns (11) of the gantry that alternatively allow rotation of the bar (1) around a first longitudinal axis (A) in the transition from the first extreme position to the intermediate vertical position and around a second longitudinal axis (B), different from the first (A), in the transition from the intermediate vertical position to the second extreme position and vice versa.

2. Installation according to claim 1, wherein the first and second longitudinal axes lie in a vertical longitudinal section plane of the bar.

3. Installation according to claim 1 or 2, wherein the drying bar (1) comprises a horizontal oscillating crossbar formed by a tubular casing wall open on one side, i.e., substantially U-shaped, in which the two walls forming the U-shape branches are parallel to each other and define a mouth for dispensing the drying air flow.

4. Installation according to one or more of the preceding claims, wherein fan units (101) for generating the drying air flow are integrated into the terminal portions of the bar.

5. Installation according to one or more of the preceding claims, wherein the coupling elements between at least one, preferably both, terminal ends of the drying bar (1) and the vertical support columns (11) of the gantry comprise a first (301) non-rotatable connection plate, preferably transverse, i.e., perpendicular to the longitudinal axis of the drying bar (1), said first plate having two arcuate guide grooves or slots (601, 601') facing each other with their concave sides and spaced apart by a predetermined distance,
wherein at least one or each terminal end of said drying bar (1) is provided with a terminal end plate (401) carrying a pair of sliding and/or rotating pins or shafts (A, B), positioned relative to each other so as to coincide respectively with one of said two slots or grooves (601, 601') of the corresponding said first plate (301),
the slots or grooves (601, 601') on the first connection plates (301) and the pairs of pins or shafts (A, B) being provided at each terminal end of the drying bar (1) and each comprising two axial pins or shafts (A, B) that are spaced apart transversely from each other and in the direction of the corresponding upper and lower sides of the drying bar (1), in vertical position, provided in axially coinciding positions with each other, with reference to the longitudinal axis of the drying bar (1),
each of said two grooves or slots (601, 601') having a curvature radius referred to an axis substantially coinciding with one end of the other of said two grooves or slots, so that by locking the pin or shaft (A, B) engaged in one of said grooves or slots (601, 601') at an end of said groove or slot (601, 601'), said pin or shaft (A, B) defines the axis of rotation that causes the translation of the other pin or shaft (B, A) along the other groove or slot (601, 601') of said two grooves or slots.

6. Installation according to claim 5, wherein the connection plates (201, 301) are transverse surfaces, i.e., perpendicular to the longitudinal axis of the drying bar, wherein the second connection plate (401) is associated with a terminal portion (201) of the drying bar (1), while the first connection plate (301) is associated with a vertical slide (501) of translation along a vertical column of the gantry (11), or vice versa, the rotation of said second plate (201) around a first rotation pin or shaft (A) causing the rotation of the bar (1) around the first longitudinal axis of rotation, and the rotation of the second plate (201) around the second rotation pin or shaft (B) causing the rotation of the bar (1) around the second longitudinal axis of rotation.

7. Installation according to one or more of the preceding claims, **characterized in that** it is configured to oscillate the drying bar so as to direct the air flow at an inclination from -α° to +α° relative to a vertical section plane, where α denotes an angle between 0° and 90°, in particular 30°.

8. Installation according to claim 7, wherein the α° position is reached from the intermediate position corresponding to a vertically or substantially vertically directed drying air flow by rotating the bar around the first longitudinal axis of rotation, holding fixed the pin or pins (A) corresponding to a first longitudinal axis of rotation at a predetermined end of the corresponding groove or slot (601), and rotating the bar around said first axis through the translation of the other pin or pins (B) in the corresponding direction from one to the other of the two ends of the groove or slot (601') in which the pin or pins (B) are engaged, whereas the -α° position is reached from the intermediate position by rotating the bar (1) around a second longitudinal axis of rotation, holding fixed at a predetermined end of the corresponding groove or slot (601') with respect to a translation along the same the pin or pins (B) that define said second longitudinal axis of rotation, and rotating the bar (1) by means of a translation of the pin or pins (A) along the corresponding grooves or slot (601) in which they are engaged.

9. Installation according to one or more of the preceding claims, wherein the alternative rotation around a first and a second of the two oscillation pins or shafts (A, B) of each pair at a corresponding terminal end of the drying bar (1) is achieved via a first (100) and a second (200) linear actuator each provided with a pull/push rod, the first linear actuator (100) being provided between one of the two oscillation pins or shafts (A) of a pair and an abutment element fixed to the second connection plate (401), and the second linear actuator (200) being provided between the second pin or shaft (B) of said pair and the same or a different abutment element fixed to the second connection plate (401), control means being provided for said linear actuators (100, 200) configured to move their rods alternately to each other such that, when the rod of a first linear actuator (100) is extended or retracted, the rod of the second linear actuator (200) is held fixed in extension, with a certain predetermined extension, so as to retain the pin or shaft (B) associated with said second actuator (200) against a translation along the corresponding groove or slot (601'), preferably at a predetermined end of said groove or slot (601'), allowing rotation of the drying bar (1) around said second oscillation pin or shaft (B) through the translation in both directions of the first pin or shaft (A) from one to the other of the ends of the corresponding groove or slot (601) in which it is engaged and vice versa.

10. Installation according to claim 9, wherein said first and second linear actuators (100, 200) are provided at only one or at both ends (201) of the drying bar (1) in combination with a first non-rotatable connection plate associated with a corresponding vertical column (11) and provided with said arcuate grooves or slots and the pair of axial pins or shafts (A, B) at the corresponding end of the drying bar.

11. Installation according to one or more of the preceding claims, wherein the rotational support terminals of the drying bar are mounted vertically slidable along a vertical column (11) and in a manner synchronized with each other in terms of time and/or stroke, in both upward and downward directions.

12. Installation according to one or more of the preceding claims, wherein said gantry, i.e., said drying bar and/or a vehicle to be treated, are translatable relative to each other in the direction of the longitudinal and/or transverse extension of said vehicle.

13. Installation according to one or more of the preceding claims, wherein the air flow of the drying bar is directed against a facing surface of the vehicle.

14. Installation according to one or more of the preceding claims, wherein profile scanning sensors (15), lateral and/or front and/or rear of the vehicle, are provided, said sensors being connected to a unit for analyzing said profile obtained from said scanning,
said analysis unit directly or indirectly controlling the positioning of the gantry and/or of the drying bar with respect to the vertical and/or horizontal position and/or to the angle of incidence of the air flow against the vehicle.
